# EUROPÄISCHE PATENTSCHRIFT

(11) **EP 3 455 109 B1**
(45) Veröffentlichungstag und Bekanntmachung des Hinweises auf die Patenterteilung: **06.11.2019**
(21) Anmeldenummer: 16721833.8
(22) Anmeldetag: 12.05.2016
(51) Int. Cl.: B60S 3/04, B60S 3/06, A46B 11/06, A46B 13/00

(54) **VORRICHTUNG UND VERFAHREN ZUM BEHANDELN EINER FAHRZEUGOBERFLÄCHE MIT EINEM FLUID**
APPARATUS AND METHOD FOR TREATING A VEHICLE SURFACE WITH A FLUID
DISPOSITIF ET PROCÉDÉ POUR TRAITER UNE SURFACE DE VÉHICULE PAR UN FLUIDE

(43) Veröffentlichungstag der Anmeldung: 20.03.2019
(73) Patentinhaber: WashTec Holding GmbH, 86153 Augsburg (DE)
(72) Erfinder: LINDER, Thomas, 86465 Welden (DE); CONRAD, Ferdinand, 86159 Augsburg (DE)
(74) Vertreter: Reitstötter Kinzebach
(86) Internationale Anmeldenummer: PCT/EP2016/060703
(87) Internationale Veröffentlichungsnummer: WO 2017/194125

(56) Entgegenhaltungen:
- EP-A2- 1 939 057
- DE-T2- 60 017 288
- US-A- 3 939 521

## Beschreibung

Die vorliegende Erfindung betrifft eine Vorrichtung zum Behandeln einer Fahrzeugoberfläche mit einem Fluid mit einer um eine Drehachse rotierbar gelagerten Dreheinrichtung und einer Fluidzuführeinrichtung, die konzentrisch zu der Dreheinrichtung angeordnet ist und die eine Einlassöffnung zur Fluidzufuhr aufweist. Ferner betrifft die Erfindung ein Verfahren zum Behandeln einer Fahrzeugoberfläche mit einem Fluid mittels einer solchen Behandlungsvorrichtung.

Es ist bekannt, Fahrzeugoberflächen mittels Waschbürsten einer Fahrzeugwaschanlage zu reinigen. Bei einer solchen Behandlung der Fahrzeugoberfläche werden Waschelemente der Waschbürste mit einer Waschflüssigkeit benetzt. Die sich drehende Bürste reinigt dann die Fahrzeugoberfläche dadurch, dass die mit Waschflüssigkeit benetzten Waschelemente über die Fahrzeugoberfläche wischen.

Üblicherweise wird die sich drehende Waschbürste dadurch befeuchtet, dass über Düsenanordnungen Waschflüssigkeit von außen auf die Waschbürste gesprüht wird. Hierdurch werden die Waschelemente der Waschbürste mit der Waschflüssigkeit benetzt. Diese Art der Benetzung der Waschelemente hat jedoch den Nachteil, dass es vorkommen kann, dass die Waschelemente nur unzureichend benetzt werden. Dies wirkt sich nachteilig auf die Reinigung der Fahrzeugoberfläche aus. Außerdem ergibt sich das Problem, dass sich Schmutz im radial inneren Teil der Waschbürste ansammelt. Die von der Außenseite aufgesprühte Waschflüssigkeit gelangt nämlich nur unzureichend ins Innere der Waschbürste, so dass der Bürstenkern trocken bleibt. Dies hat zur Folge, dass die Waschelemente der Waschbürste häufig ausgetauscht und gereinigt werden müssen.

Zur Lösung dieses Problems wird in der DE 600 17 288 T2 eine Vorrichtung vorgeschlagen, bei der die Waschbürste von innen über eine Ausdehnung von 360° hinweg befeuchtet wird. Hierdurch soll ein andauerndes und beständiges Befeuchten eines Reinigungsbürstenkörpers mit Waschflüssigkeit sichergestellt werden. Nachteilig an dieser Waschbürste ist jedoch, dass der Waschflüssigkeitsverbrauch relativ hoch ist.

Die EP 1 939 057 A2 beschreibt eine Reinigungsbürste mit schwenkbaren Sprühdüsen für die Reinigung von Fahrzeugen.

Die US 3 939 521 A beschreibt eine Rotationsbürstenkonstruktion, insbesondere für eine Dachbürste, zum Waschen von Fahrzeugen mit länglichen Borsten, die auf einem perforierten hohlzylindrischen Kern mit relativ kleinem Durchmesser getragen werden.

Der vorliegenden Erfindung liegt daher die Aufgabe zugrunde, eine Vorrichtung und ein Verfahren der eingangs genannten Art bereitzustellen, welche mit einem geringerem Fluidverbrauch betrieben werden können.

Erfindungsgemäß wird diese Aufgabe durch eine Vorrichtung mit den Merkmalen des Anspruchs 1 und ein Verfahren mit den Merkmalen des Anspruchs 13 gelöst. Vorteilhafte Ausgestaltungen und Weiterbildungen ergeben sich aus den abhängigen Ansprüchen.

Die erfindungsgemäße Vorrichtung ist dadurch gekennzeichnet, dass bei der Fluidzuführeinrichtung eine Nut ausgebildet ist, die in Fluidverbindung mit der Einlassöffnung ist und die sich in Umfangsrichtung bezüglich der Drehachse über einen begrenzten Umfangswinkelbereich der Fluidzuführeinrichtung erstreckt. Ferner weist die Dreheinrichtung mehrere separate Fluidkanäle auf, die jeweils in Öffnungen münden. Diese Öffnungen sind so angeordnet, dass unabhängig von der Winkelstellung der Dreheinrichtung zu der Fluidzuführeinrichtung bezüglich der Drehachse zumindest eine der Öffnungen der Dreheinrichtung in Fluidverbindung mit der Nut der Fluidzuführeinrichtung steht.

Bei der erfindungsgemäßen Vorrichtung ergibt sich somit ein Fluidübergang von der Nut der Fluidzuführeinrichtung in die Fluidkanäle der im Betrieb rotierenden Dreheinrichtung. Dabei wird vorteilhafterweise einerseits eine Beschickung zumindest eines Fluidkanals mit Fluid in jeder Winkelstellung der Dreheinrichtung sichergestellt, da immer eine oder mehrere der Öffnungen der Dreheinrichtung in Fluidverbindung mit der Nut stehen. Andererseits ermöglicht es der begrenzte Umfangswinkelbereich, über welchen sich die Nut in der Fluidzuführeinrichtung erstreckt, dass nicht alle Fluidkanäle der rotierenden Dreheinrichtung dauerhaft mit Fluid versorgt werden. Hierdurch ist es vorteilhafterweise möglich, die Fluidkanäle sequentiell mit Fluid aus der Nut zu versorgen, wenn die Dreheinrichtung rotiert. Die Behandlung der Fahrzeugoberfläche mit dem Fluid kann auf diese Weise zielgerichteter erfolgen, da der Fluidaustritt so gesteuert werden kann, dass er nur dort erfolgt, wo das Fluid benötigt wird. Hierdurch kann vorteilhafterweise der Fluidverbrauch beim Behandeln der Fahrzeugoberfläche verringert werden.

Unter einem begrenzten Umfangswinkelbereich bezüglich der Drehachse wird in dieser Schrift verstanden, dass die Nut sich nicht mit der vollen Umdrehung von 360° um die Drehachse herum erstreckt, sondern in einem Umfangswinkelbereich, der kleiner als 360° ist. Dabei erstreckt sich die Nut in der Fluidzuführeinrichtung insbesondere auf einem Abschnitt eines konzentrischen Rings, der um die Drehachse angeordnet ist.

Vorteilhafterweise steht bei jeder Winkelstellung der Dreheinrichtung zu der Fluidzuführeinrichtung bezüglich der Drehachse zumindest eine der Öffnungen der Dreheinrichtung in Fluidverbindung mit der Nut und zumindest eine andere der Öffnungen der Dreheinrichtung nicht in Fluidverbindung mit der Nut.

Bei dem Fluid handelt es sich insbesondere um eine Wasch- oder Reinigungsflüssigkeit. Es kann sich beispielsweise um ein Flüssigkeitsgemisch aus Wasser und einer chemischen Verbindung handeln, welche für die Reinigung einer Fahrzeugoberfläche geeignet ist. Bei dem Fluid kann es sich jedoch auch um ein Trocknungs- oder Reinigungsgas handeln.

Wenn die Vorrichtung ausgebildet ist, eine Fahrzeugoberfläche beispielsweise in einer Fahrzeugwaschanlage zu waschen, können an der Dreheinrichtung Behandlungs- oder Waschelemente befestigt sein. Die Waschelemente sind in diesem Fall radial innen an der Dreheinrichtung montiert. Das andere Ende der Waschelemente kann sich radial nach außen von der Dreheinrichtung weg erstrecken. In diesem Fall wird zum Beispiel eine Waschbürste gebildet. Bei den Waschelementen kann es sich jedoch auch um Lappen, Fäden oder dergleichen handeln.

Die Dreheinrichtung ist insbesondere länglich, wobei sich die Längsrichtung parallel zur Drehachse erstreckt. Beispielsweise ist die Dreheinrichtung zylindrisch ausgebildet, wobei die Drehachse insbesondere mit der Zylinderachse zusammenfällt.

Gemäß einer Ausgestaltung der erfindungsgemäßen Vorrichtung verbindet jeder Fluidkanal die ihm zugeordnete Öffnung der Dreheinrichtung mit mehreren Auslassöffnungen, die in Längsrichtung der Dreheinrichtung beabstandet voneinander angeordnet sind. Die Auslassöffnungen eines Fluidkanals sind dabei bei jeweils im Wesentlichen demselben Umfangswinkel der Dreheinrichtung angeordnet und die Auslassöffnungen eines anderen Fluidkanals sind bei einem anderen Umfangswinkel der Dreheinrichtung als die Auslassöffnung des einen Fluidkanals angeordnet. Zu jedem Fluidkanal gehören somit mehrere Auslassöffnungen, die alle im Wesentlichen bei demselben Umfangswinkel der Dreheinrichtung angeordnet sind. Wenn somit einem Fluidkanal bei einer bestimmten Winkelstellung der Dreheinrichtung relativ zu der Fluidzuführeinrichtung über die Nut Fluid zugeführt wird, wird dieses Fluid bei einem bestimmten Umfangswinkel der Dreheinrichtung ausgestoßen. Wenn mehreren Fluidkanälen über die Nut Fluid zugeführt wird, wird das Fluid nur über die Auslassöffnungen dieser Fluidkanäle ausgestoßen. In diesem Fall erfolgt der Ausstoß des Fluids in einem begrenzten Umfangswinkelbereich der Dreheinrichtung.

Die Auslassöffnungen eines bestimmten Fluidkanals sind im Wesentlichen bei demselben Umfangswinkel angeordnet, das heißt, der Winkel, über den sich die Auslassöffnungen dieses bestimmten Fluidkanals erstrecken können, kann beispielsweise in einem Bereich von 0° bis 10° liegen. Bevorzugt sind die Auslassöffnungen eines bestimmten Fluidkanals jedoch bei demselben Umfangswinkel der Dreheinrichtung angeordnet.

Betrachtet man einen Querschnitt durch die Dreheinrichtung in einer Ebene senkrecht zur Drehachse, bei welchem eine Auslassöffnung eines Fluidkanals angeordnet ist, sind bei diesem Schnitt bevorzugt in Umfangsrichtung bezüglich der Drehachse beabstandet voneinander auf dem Umfang der Dreheinrichtung gleich verteilt die Auslassöffnungen verschiedener Fluidkanäle angeordnet. Die Erstreckung der Nut der Fluidzuführeinrichtung über einen begrenzten Umfangswinkelbereich wird somit von den Fluidkanälen, die nur bei bestimmten Winkelstellungen der Dreheinrichtung zu der Fluidzuführeinrichtung in Fluidverbindung mit der Nut stehen, in einen begrenzten Winkelbereich umgesetzt, in den Fluid nach außen über die Auslassöffnungen austritt. Dieser begrenzte Winkelbereich für den Fluidaustritt weist somit eine feste Zuordnung zu der Winkelstellung der Nut auf, und zwar auch dann, wenn die Dreheinrichtung relativ zu der Fluidzuführeinrichtung rotiert. Zwischen der Nut und den Öffnungen der Fluidkanäle ergibt sich nämlich eine sequentielle Drehschiebersteuerung, die dafür sorgt, dass nur in einem bestimmten begrenzten Winkelbereich Fluid ausgestoßen wird. Dieser Fluidausstoß erfolgt jedoch aufgrund der Rotation der Dreheinrichtung immer über andere Fluidkanäle und deren Auslassöffnungen, so dass über den gesamten Umfang der Dreheinrichtung radial von innen Fluid ausgestoßen wird. Dies ist insbesondere dann von Vorteil, wenn Behandlungselemente an der Dreheinrichtung befestigt sind. Diese Behandlungselemente werden in diesem Fall vollständig radial von innen her mit Fluid beaufschlagt. Insbesondere wenn es sich bei dem Fluid um eine Waschflüssigkeit handelt, ist dies von Vorteil. Die Behandlungselemente werden dann vollständig von innen heraus mit Waschflüssigkeit benetzt. Hierdurch wird vorteilhafterweise verhindert, dass sich Schmutz im radial inneren Teil der Behandlungselemente ansammelt. Gleichzeitig wird der Verbrauch an Waschflüssigkeit jedoch dadurch gesenkt, dass der Waschflüssigkeitsausstoß immer nur in einem begrenzten Winkelbereich erfolgt.

Gemäß einer bevorzugten Weiterbildung der erfindungsgemäßen Vorrichtung erfasst die Fluidzuführeinrichtung einen Außenring, der eine rotationssymmetrische, insbesondere kreiszylinderförmige, Innenwand besitzt. Die Nut ist in diesem Fall in der rotationssymmetrischen Innenwand gebildet. Die Nut ist insbesondere ein Einschnitt in der Innenwand. Sie ist bei einem Kreisabschnitt in einem begrenzten Umfangswinkelbereich, das heißt, nicht über den vollen Umfang von 360° gebildet. Die Fluidzufuhr von der Einlassöffnung kann beispielsweise über eine radiale Bohrung von der Einlassöffnung zu der Nut erfolgen. Durch die Verwendung eines Außenrings für die Fluidzufuhr lässt sich die Fluidzuführeinrichtung sehr einfach und kostengünstig herstellen. Außerdem lässt sich konstruktionstechnisch vorteilhaft die Kopplung zu der rotierenden Dreheinrichtung herstellen.

Die Nut erstreckt sich bei der rotationssymmetrischen Innenwand des Außenrings insbesondere über einen Umfangswinkel, der in einem Bereich von 20° bis 180° liegt. Über den Umfangswinkelbereich der Nut lässt sich einstellen, wievielen Fluidkanälen der Dreheinrichtung gleichzeitig Fluid zugeführt wird. Über diesen Bereich lässt sich somit letztendlich einstellen, in welchen Winkelbereich Fluid über die Auslassöffnungen ausgestoßen wird. Der Umfangswinkelbereich der Nut wird dabei so gewählt, dass einerseits optimale Ergebnisse bei der Behandlung der Fahrzeugoberfläche erzielt werden. Andererseits wird der Umfangswinkelbereich so begrenzt, dass der Fluidverbrauch nur so groß wie nötig ist. Der Umfangswinkelbereich der Nut kann dabei vorteilhafterweise in einem Bereich von 30° bis 140° liegen, bevorzugt in einem Bereich von 80° bis 130°. Insbesondere erstreckt sich der Umfangswinkel über einen Bereich von 90° oder 120°.

Gemäß einer weiteren Ausgestaltung der erfindungsgemäßen Vorrichtung umfasst die Dreheinrichtung einen Innenring, der eine rotationssymmetrische, insbesondere kreiszylinderförmige, Außenwand besitzt, die an die rotationssymmetrische, insbesondere kreiszylinderförmige, Innenwand des Außenrings angrenzt. Die Öffnungen der Dreheinrichtung sind in diesem Fall in Umfangsrichtung bei der rotationssymmetrischen Außenwand angeordnet. Durch diese Art der Kopplung des Innenrings mit dem Außenring wird eine sequentielle Drehschiebersteuerung erreicht, durch welche aufeinanderfolgend verschiedene Teilmengen der Fluidkanäle der Dreheinrichtung mit Fluid beschickt werden. Durch die rotationssymmetrischen, insbesondere kreiszylinderförmigen Ausgestaltungen der Außenwand des Innenrings und der Innenwand des Außenrings lässt sich eine konstruktionstechnisch sehr einfache Kopplung zwischen dem Innenring und dem Außenring herstellen, bei welcher sich der Innenring relativ zum Außenring drehen kann. Die aneinander angrenzenden Flächen des Innen- und Außenrings können auch konisch, insbesondere kegelmantelförmig, ausgebildet sein.

Der Innenring und der Außenring sind insbesondere bei den rotationssymmetrischen, angrenzenden Flächen so gedichtet, dass Fluid, das von der Nut in die Fluidkanäle fließt oder strömt, nicht nach außen austreten kann. Hierfür werden beispielsweise Rotationsdichtungen zwischen dem Innenring und dem Außenring eingesetzt.

Gemäß einer Ausgestaltung der erfindungsgemäßen Vorrichtung erstreckt sich jeder Fluidkanal von der ihm zugeordneten Öffnung radial nach innen in den Innenring hinein. Anschließend verläuft jeder Fluidkanal in Längsrichtung der Dreheinrichtung zu den Auslassöffnungen. Der Innenring kann somit mehrere in Umfangsrichtung beabstandete radiale Bohrungen umfassen, welche die Öffnungen bilden, die je nach Winkelstellung der Dreheinrichtung in Fluidverbindung mit der Nut der Fluidzuführeinrichtung stehen. Ferner können Bohrungen gebildet sein, welche parallel zur Drehachse der Dreheinrichtung verlaufen und welche im Innenring auf die radialen Bohrungen treffen. Auf diese Weise werden voneinander getrennte Abschnitte der Fluidkanäle im Innenring gebildet. In Längsrichtung können diese Fluidkanäle dann in der Dreheinrichtung bis zu den Auslassöffnungen weitergeführt werden.

Gemäß einer Ausgestaltung der erfindungsgemäßen Vorrichtung umfasst die Dreheinrichtung eine Bürstenwelle und eine Bürstenringanordnung. Die Bürstenringanordnung ist in diesem Fall konzentrisch zu, außen an und drehfest mit der Bürstenwelle angeordnet. Ferner sind Behandlungselemente, insbesondere Bürstenelemente, an der Bürstenringanordnung befestigt. Jeder Fluidkanal umfasst in diesem Fall einen innerhalb des Innenrings verlaufenden Abschnitt und einen innerhalb der Bürstenringanordnung verlaufenden Abschnitt. Die Auslassöffnungen sind in der Bürstenringanordnung gebildet. Bei dieser Ausgestaltung kann vorteilhafterweise die Bürstenwelle das Drehmoment des Motors auf die Dreheinrichtung übertragen. Die drehfest mit der Bürstenwelle montierte Bürstenringanordnung stellt hingegen die Fluidkanäle und die Auslassöffnungen bereit. Die Bürstenringanordnung kann somit aus einem anderen Material bestehen als die Bürstenwelle. Die Bürstenwelle besteht beispielsweise aus Metall, insbesondere aus einem extrudierten Aluminium, die Bürstenringanordnung aus Kunststoff. Die Behandlungselemente erstrecken sich insbesondere radial von der Bürstenringanordnung weg. Sie werden durch die Auslassöffnungen der Bürstenringanordnung von innen heraus mit Fluid beaufschlagt. Wenn es sich bei dem Fluid um eine Waschflüssigkeit handelt, werden die Behandlungselemente von innen heraus mit der Waschflüssigkeit benetzt. Hierdurch wird eine vollständige Benetzung der Behandlungselemente sichergestellt. Ferner wird eine Anlagerung von Schmutz im radial inneren Teil der Behandlungselemente vermieden.

Gemäß einer Weiterbildung der erfindungsgemäßen Vorrichtung sind die Auslassöffnungen so ausgebildet, dass Fluid in einem Fluidstrahl in einen Raumwinkel ausgespritzt wird, der in einem Bereich von 0° bis 100°, insbesondere von 0° bis 15°, liegt. Alternativ oder zusätzlich schließt die Mittelachse des ausgespritzten Fluidstrahls einen Winkel mit der Drehachse ein, der in einem Bereich von 40° bis 90° liegt. Dabei bedeutet ein Winkel von 90°, dass der Fluidstrahl senkrecht zur Drehachse, d. h. radial, austritt. Dieser Winkel wird insbesondere bei Vorrichtungen zur Behandlung des Dachs eines Fahrzeugs eingesetzt. Wenn im Wesentlichen vertikale Fahrzeugoberflächen behandelt werden, ist der Winkel kleiner als 90°, d. h. der Strahl ist schräg nach unten gerichtet.

Die Größe des Raumwinkels kann von dem Abstand der Auslassöffnungen sowie von der Art der Behandlung der Fahrzeugoberfläche abhängen. Der Fluidstrahl kann dabei senkrecht zur Drehachse oder schräg zur Drehachse ausgestoßen werden. In den Auslassöffnungen können insbesondere Düsen angeordnet sein, mit denen sich der Fluidaustritt steuern lässt. Alternativ werden die Auslassöffnungen von Bohrungen gebildet, die senkrecht oder schräg zur Drehachse in der Dreheinrichtung gebildet sind.

Die Bürstenringanordnung kann mehrere in Längsrichtung der Dreheinrichtung auf der Bürstenwelle befestigte und miteinander gekoppelte Bürstenringsegmente aufweisen. Die Bürstenringsegmente weisen jeweils Abschnitte der Fluidkanäle auf. Für die Kopplung der einzelnen Bürstenringsegmente können bei den Fluidkanälen Anschlussstücke vorgesehen sein, welche einen Übertritt des Fluids von einem Bürstenringsegment zu einem anderen Bürstenringsegment erlauben, wobei kein Flüssigkeitsleck auftritt.

Gemäß einer weiteren Ausgestaltung der erfindungsgemäßen Vorrichtung bestehen der Innenring und der Außenring aus demselben Material, insbesondere aus Kunststoff. Dies hat den Vorteil, dass die Wärmeausdehnungskoeffizienten des Innenrings und des Außenrings dieselben sind, so dass ein Fluidleck beim Übergang des Fluids von der Nut des Außenrings in die Fluidkanäle des Innenrings auch bei hohen Temperaturschwankungen vermieden werden kann. Die Fertigung des Innenrings und des Außenrings aus Kunststoff ist dabei vorteilhafterweise sehr kostengünstig.

Gemäß einer Weiterbildung der erfindungsgemäßen Vorrichtung ist die Dreheinrichtung mit zumindest einer Metalleinlage drehfest gekoppelt, die an einer Motorwelle befestigt ist und die im Eingriff mit dem Innenring ist. Insbesondere wenn der Innenring aus einem Kunststoff gefertigt ist, können die Kräfte der Motorwelle bei einer Drehung des Innenrings durch die Metalleinlage auf den Innenring übertragen werden.

Gemäß einer Weiterbildung der erfindungsgemäßen Vorrichtung ist die Winkelstellung der Fluidzuführeinrichtung bezüglich der Drehachse verstellbar. Die Winkelstellung der Fluidzuführeinrichtung bestimmt die Winkelstellung der Nut. Diese bestimmt wiederum, bei welcher Winkelstellung der Dreheinrichtung den Fluidkanälen von der Nut Fluid zugeführt wird. Hierdurch wird wiederum festgelegt, in welchem Winkelbereich das Fluid die Auslassöffnungen relativ zu einem ortsfesten äußeren Koordinatensystem verlässt. Durch die Winkelstellung der Fluidzuführeinrichtung kann somit festgelegt werden, in welche Richtung das Fluid nach außen ausgestoßen wird. Durch die Verstellbarkeit der Winkelstellung der Fluidzuführeinrichtung kann somit exakt festgelegt werden, dass das Fluid in gewünschter Weise auf eine Fahrzeugoberfläche trifft. Hierdurch kann das Behandlungsresultat verbessert und der Fluidverbrauch gesenkt werden.

Das erfindungsgemäße Verfahren zum Behandeln einer Fahrzeugoberfläche mit einem Fluid mittels einer Behandlungsvorrichtung, die eine um eine Drehachse rotierbar gelagerte Dreheinrichtung mit separaten Fluidkanälen und eine konzentrisch zu der Dreheinrichtung angeordnete Fluidzuführeinrichtung umfasst, weist die folgenden Schritte auf: Fluid wird über eine Einlassöffnung der Fluidzuführeinrichtung zugeführt. Das Fluid wird in der Fluidzuführeinrichtung von der Einlassöffnung in eine Nut geleitet, die in Fluidverbindung mit der Einlassöffnung ist und die sich in Umfangsrichtung bezüglich der Drehachse über einen begrenzten Umfangswinkelbereich der Fluidzuführeinrichtung erstreckt. Das Fluid wird der rotierenden Dreheinrichtung zugeführt, wobei das Fluid von der Nut einer Teilmenge der Fluidkanäle zugeführt wird, wobei Öffnungen der Fluidkanäle so angeordnet sind, dass unabhängig von der Winkelstellung der Dreheinrichtung zu der Fluidzuführeinrichtung bezüglich der Drehachse zumindest eine Öffnung in Fluidverbindung mit der Nut der Fluidzuführeinrichtung steht.

Das erfindungsgemäße Verfahren lässt sich insbesondere mittels der vorstehend beschriebenen Vorrichtung ausführen. Es weist somit auch dieselben Vorteile wie die Vorrichtung auf.

Gemäß einer Ausgestaltung des erfindungsgemäßen Verfahrens wird das Fluid von einem der Fluidkanäle mehreren Auslassöffnungen der Dreheinrichtung zugeführt und bei den Auslassöffnungen ausgespritzt, insbesondere im Wesentlichen radial ausgespritzt. Die Auslassöffnungen eines Fluidkanals sind dabei in Längsrichtung der Dreheinrichtung beabstandet voneinander angeordnet, wobei die Auslassöffnungen eines Fluidkanals bei jeweils im Wesentlichen demselben Umfangswinkel der Dreheinrichtung angeordnet sind und die Auslassöffnungen eines anderen Fluidkanals bei einem anderen Umfangswinkel der Dreheinrichtung als die Auslassöffnungen des einen Fluidkanals angeordnet sind. Auf diese Weise bestimmt bei dem erfindungsgemäßen Verfahren die Winkelstellung der Nut der Fluidzuführeinrichtung den Umfangswinkel beziehungsweise den Umfangswinkelbereich, bei dem das Fluid ausgestoßen wird. Hierdurch kann vorteilhafterweise der Fluidausstoß hinsichtlich des Umfangswinkels eingeschränkt werden, wobei eine wirksamere und sparsamere Behandlung der Fahrzeugoberfläche ermöglicht wird.

Gemäß einer weiteren Ausgestaltung des erfindungsgemäßen Verfahrens wird die Winkelstellung der Behandlungsvorrichtung relativ zu einer zu reinigenden Fahrzeugoberfläche erfasst. Die Winkelstellung der Nut der Fluidzuführeinrichtung wird nun bezüglich der Drehachse in Abhängigkeit von der erfassten Winkelstellung der Behandlungsvorrichtung relativ zu der zu reinigenden Fahrzeugoberfläche eingestellt. Die Fahrzeugoberfläche kann beispielsweise zu einem Fahrzeug gehören, das sich in einer Fahrzeug-Waschanlage befindet. In diesem Fall verändert sich die relative Lage der Behandlungsvorrichtung zu der zu reinigenden Fahrzeugoberfläche. Durch Verstellung der Winkelstellung der Nut kann auch der Umfangswinkel für den Ausstoß des Fluids so eingestellt werden, dass der Fluidausstoß auch bei sich verändernder Lage der Behandlungsvorrichtung zu dem Fahrzeug immer in Richtung der Fahrzeugoberfläche gerichtet ist. Auch hierdurch kann der Fluidverbrauch verringert und das Behandlungsergebnis verbessert werden.

Die Erfindung wird nun anhand eines Ausführungsbeispiels mit Bezug zu den Zeichnungen erläutert.
- Figur 1: zeigt eine Teilansicht eines Ausführungsbeispiels der erfindungsgemäßen Behandlungsvorrichtung,
- Figur 2: zeigt einen Schnitt in Längsrichtung eines Ausschnitts der in Figur 1 gezeigten Behandlungsvorrichtung,
- Figur 3: zeigt eine Explosionsdarstellung der Verbindung des Außenrings mit dem Innenring des Ausführungsbeispiels der erfindungsgemäßen Behandlungsvorrichtung,
- Figur 4: zeigt einen Schnitt in Längsrichtung des in Figur 1 gezeigten Ausführungsbeispiels der erfindungsgemäßen Behandlungsvorrichtung, in welchem der Fluidfluss dargestellt ist,
- Figur 5: zeigt eine Schnitt in Querrichtung des in Figur 4 gezeigten Ausführungsbeispiels der erfindungsgemäßen Behandlungsvorrichtung und
- Figuren 6-8: zeigen den Einsatz des Ausführungsbeispiels der erfindungsgemäßen Behandlungsvorrichtung in einer Fahrzeugwaschanlage bei verschiedenen Positionen der Behandlungsanlage relativ zu dem Fahrzeug mit der zu reinigenden Fahrzeugoberfläche.

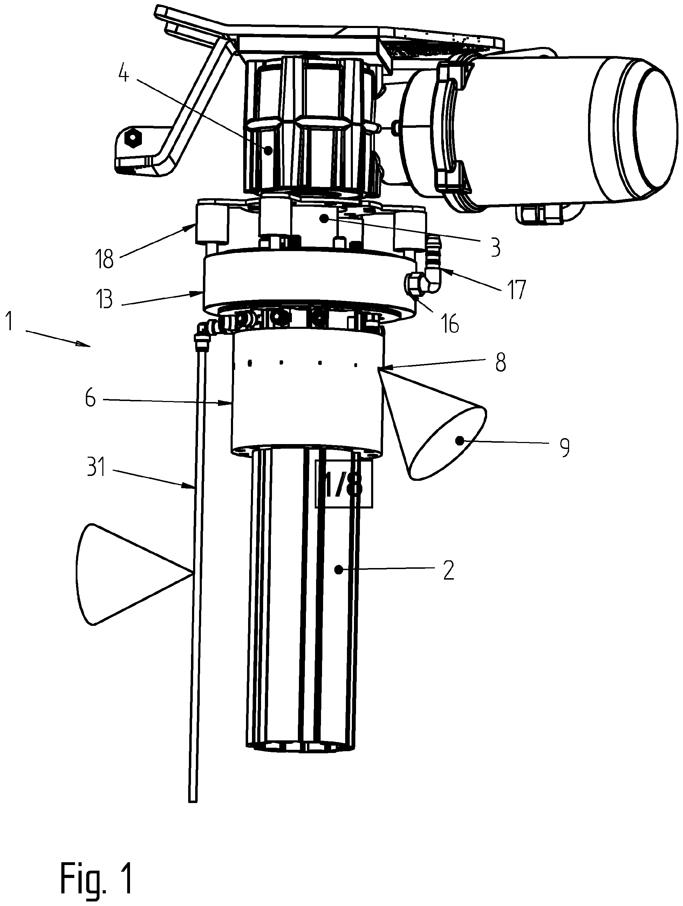

Mit Bezug zu den Figuren 1 bis 5 wird das Ausführungsbeispiel der erfindungsgemäßen Behandlungsvorrichtung 1 erläutert. Bei der Behandlungsvorrichtung 1 dieses Ausführungsbeispiels handelt es sich um eine Vorrichtung zum Reinigen einer Fahrzeugoberfläche. Das Fluid, welches über die Behandlungsvorrichtung 1 ausgestoßen wird, ist entsprechend eine Waschflüssigkeit. Die Behandlungsvorrichtung 1 kann jedoch auch anderen Zwecken dienen, wobei anstatt einer Waschflüssigkeit auch ein Gas wie zum Beispiel Luft ausgestoßen werden kann.

Die Behandlungsvorrichtung 1 umfasst eine Bürstenwelle 2. Die Bürstenwelle 2 besteht aus einem Metall wie zum Beispiel Aluminium. Sie besitzt eine längliche zylindrische Form und ist rotierbar gelagert. Die Bürstenwelle 2 weist Einschnitte in radialer Richtung auf, in welche andere Anordnungen eingreifen können, so dass die Bürstenwelle 2 ein Drehmoment übertragen kann, wenn sie in Rotation versetzt wird.

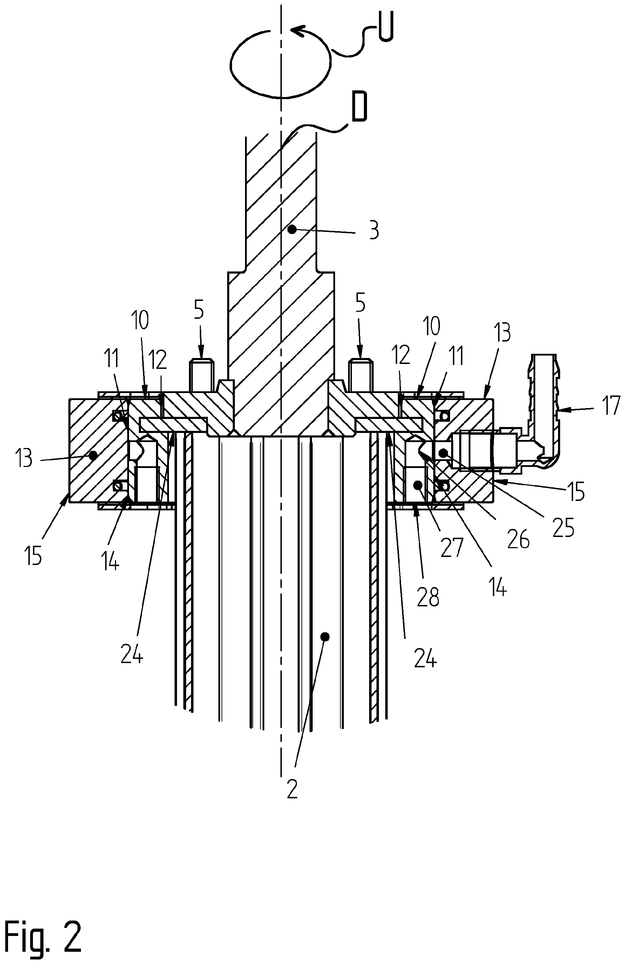

Die Bürstenwelle 2 ist mit einer Motorwelle 3 eines Motors 4 drehfest gekoppelt. Wie in Figur 2 gezeigt, kann die Bürstenwelle 2 beispielsweise mittels Schrauben 5 mit der Motorwelle 3 verbunden sein.

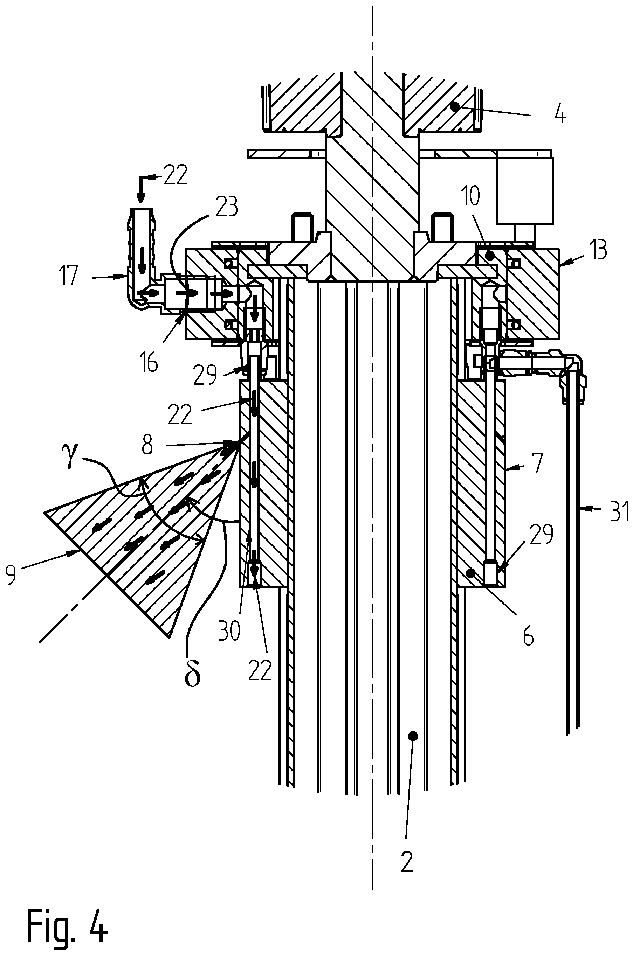

An der Bürstenwelle 2 ist eine Bürstenringanordnung 6 verdrehsicher angeordnet. Die Bürstenringanordnung 6 ist bezüglich der Drehachse D der Bürstenwelle 2 konzentrisch zu der Bürstenwelle 2. Die Bürstenringanordnung 6 ist im Eingriff mit den Einschnitten der Bürstenwelle 2, so dass eine Rotation der Bürstenwelle 2 an die Bürstenringanordnung 6 übertragen wird. In Längsrichtung ist die Bürstenringanordnung 6 in mehrere Bürstenringsegmente 7 unterteilt, wie es in Figur 4 gezeigt ist.

Die Bürstenringanordnung 6 weist eine Vielzahl von Auslassöffnungen 8 auf. Über die Auslassöffnungen 8 wird ein Fluidstrahl 9 ausgestoßen. Hierfür kann in jeder Auslassöffnung 8 beispielsweise eine Düse angeordnet sein. Wie in Figur 4 gezeigt, erfolgt der Fluidausstoß in einen Raumwinkel der Größe γ, wobei die Mittelachse des Fluidstrahls 9 einen Winkel δ mit der Drehachse D einschließt. Der Winkel γ ist im vorliegenden Ausführungsbeispiel etwa 50°. Er kann jedoch auch sehr viel geringer sein, z. B. 0° oder 15°, und beliebig an die Erfordernisse der Behandlungsvorrichtung 1 angepasst werden. Der Winkel δ ist im vorliegenden Ausführungsbeispiel 45°. Der Fluidausstoß kann jedoch auch senkrecht zur Drehachse erfolgen. In diesem Fall ist der Winkel δ 90°. Auch in diesem Fall kann der Winkel δ jedoch auch anders gewählt werden, um den Fluidausstoß an die Erfordernisse der Behandlungsvorrichtung 1 anzupassen.

Die Bürstenwelle 2 und die Motorwelle 3 sind mit einem Innenring 10 gekoppelt. Der Innenring 10 ist bezüglich der Drehachse D konzentrisch zu der Bürstenwelle 2 angeordnet. Er weist eine Innenwand 12 auf, welche an die Außenwand der Bürstenwelle 2 angrenzt. Ferner weist der Innenring 10 eine rotationssymmetrische Außenwand 11 auf. Im vorliegenden Ausführungsbeispiel ist die Außenwand kreiszylindrisch.

Der Innenring 10 ist aus Kunststoff gefertigt. Für eine sichere drehfeste Kopplung des Innenrings 10 mit der Motorwelle 3 beziehungsweise der Bürstenwelle 2 sind Metalleinlagen 24 vorgesehen, welche mittels der Schrauben 5 an der Motorwelle 3 beziehungsweise der Bürstenwelle 2 befestigt sind. Ferner greifen die Metalleinlagen 24 in Einschnitte des Innenrings 10 ein, wie es in Figur 2 gezeigt ist. Auf diese Weise wird der Innenring 10 drehfest mit der Motorwelle 3 gekoppelt, so dass er mit der Motorwelle 3 rotieren kann. Der Innenring 10, die Bürstenwelle 2 und die Bürstenringanordnung 6 bilden somit eine um die Drehachse D rotierbar gelagerte längliche Dreheinrichtung.

Konzentrisch zu dem Innenring 10 ist ein Außenring 13 angeordnet. Der Außenring 13 weist eine rotationssymmetrische, im Ausführungsbeispiel eine kreiszylinderförmige Innenwand 14 auf, welche dicht an die kreiszylinderförmige Außenwand 11 des Innenrings 10 angrenzt. Ferner weist der Außenring 13 eine Außenwand 15 auf, welche im vorliegenden Ausführungsbeispiel auch kreiszylinderförmig ausgebildet ist. In der Außenwand 15 des Außenrings 13 ist eine Einlassöffnung 16 für ein Fluid gebildet. Im vorliegenden Ausführungsbeispiel befindet sich in dieser Einlassöffnung 16 eine Schlauchtülle 17, an welcher ein Schlauch zum Zuführen eines Fluids angeschlossen werden kann.

Bei einer rotierenden Dreheinrichtung, das heißt bei einem rotierenden Innenring 10, wird der Außenring 13 stationär mittels der Befestigungselemente 18 gehalten. Mittels der Befestigungselemente 18 lässt sich jedoch die Winkelstellung des Außenrings 13 bezüglich der Drehachse D verstellen, wie es später erläutert werden wird.

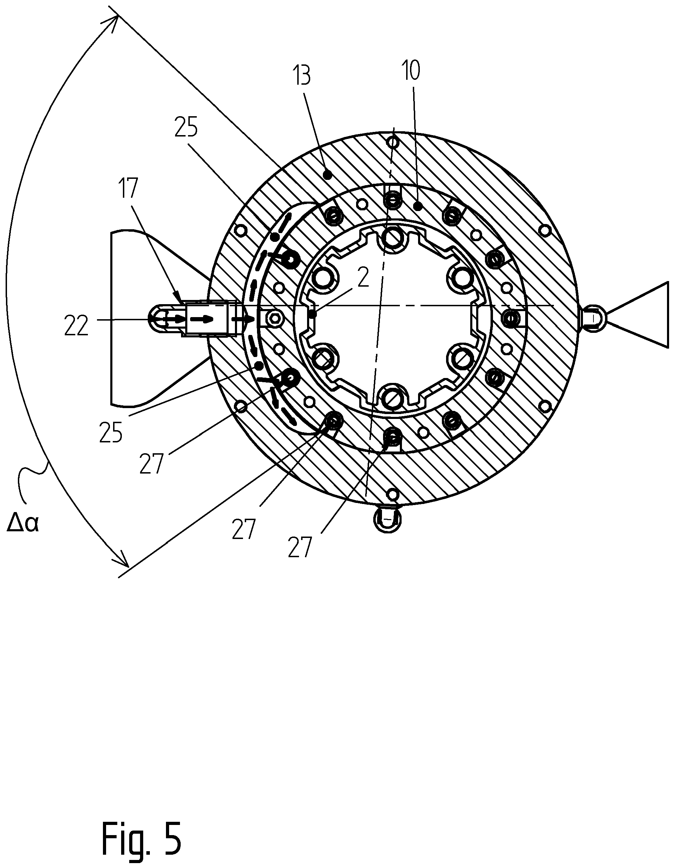

Wie es am besten in Figur 5 zu erkennen ist, ist auf der Innenseite des Außenrings 13, das heißt bei der Innenwand 14 (vgl. Figur 2), eine Nut 25 ausgebildet. Die Nut 25 ist ein Einschnitt in der Innenwand 14. Sie ist in Fluidverbindung mit der Einlassöffnung 16 beziehungsweise mit der Schlauchtülle 17. Hierfür erstreckt sich eine radiale Bohrung in dem Außenring 13 von der Einlassöffnung 16 bis zu der Nut 25. Die Nut 25 erstreckt sich in Umfangsrichtung U (vgl. Figur 2) bezüglich der Drehachse D über einen begrenzten Umfangswinkelbereich Δα des Außenrings 13. Im vorliegenden Ausführungsbeispiel ist der Umfangswinkelbereich Δα 120°. Dieser Umfangswinkelbereich Δα kann jedoch auch größer oder kleiner sein. Er erstreckt sich jedoch nicht über den vollen Umfangswinkel von 360°. Die radiale Bohrung trifft bei dem Ausführungsbeispiel mittig auf die Nut 25. Von außen kann somit Fluid 22 über die Schlauchtülle 17, die Einlassöffnung 16 und die radiale Bohrung in dem Außenring 13 in die Nut 25 gelangen. Der Außenring 13 gegebenenfalls mit der Schlauchtülle 17 werden daher auch als Fluidzuführeinrichtung bezeichnet.

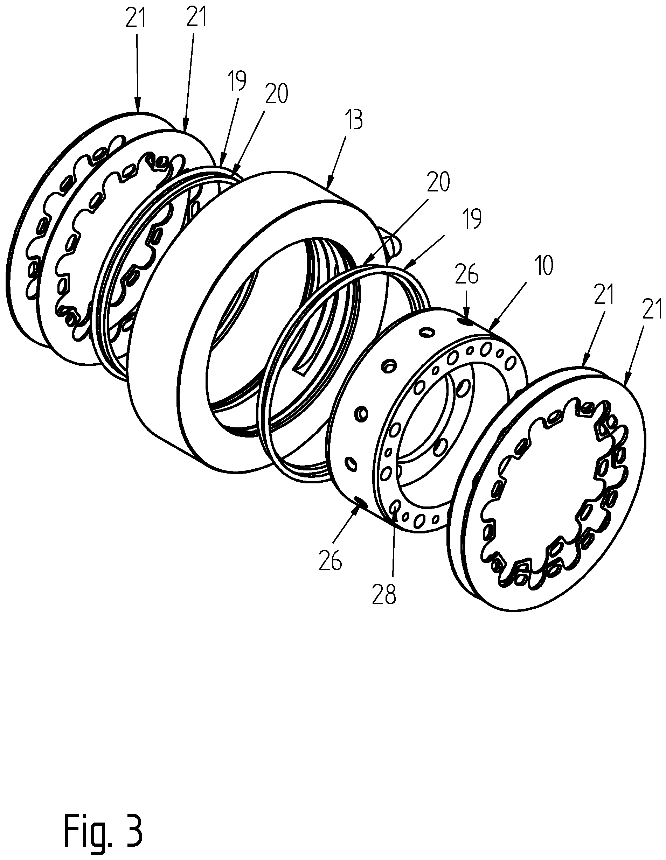

Mit Bezug zu den Figuren 2 und 3 wird erläutert, wie der drehbar gelagerte Innenring 10 mit dem stationären, jedoch verstellbaren Außenring 13 gekoppelt ist. Der Innenring 10 ist formschlüssig in den Außenring 13 eingesetzt, so dass die Außenwand 11 des Innenrings 10 die Innenwand 14 des Außenrings 13 berührt. Axial beidseitig von der Nut 25 sind Rotationsdichtungen 20 und O-Ringe 19 angeordnet, die verhindern, dass Fluid von der Nut 25 durch den Zwischenraum zwischen der Außenwand 11 des Innenrings 10 und der Innenwand 14 des Außenrings 13 nach außen austritt. Ferner sind noch Anschlussringe 21 vorgesehen für den Anschluss weiterer Einrichtungen in axialer Richtung.

In dem Innenring 10 ist ein Fluidkanalabschnitt 27 von zwei Bohrungen gebildet. Die eine Bohrung verläuft in radialer Richtung und mündet bei der Außenwand 11 des Innenrings 10 in die Öffnung 26. Die andere damit verbundene Bohrung verläuft in einer Richtung parallel zur Drehachse D, das heißt in axialer Richtung, und mündet in der Öffnung 28 an der Unterseite des Innenrings 10 (siehe Figur 2). In dem Innenring 10 sind mehrere solcher Fluidkanalabschnitte 27 gebildet, wie es insbesondere in Figur 5 erkennbar ist. Die Fluidkanalabschnitte 27 sind jedoch getrennt voneinander, das heißt, sie stehen nicht in Fluidverbindung miteinander.

Wie es am besten in Figur 5 gezeigt ist, sind im zusammengebauten Zustand des Innenrings 10 mit dem Außenring 13 unabhängig von der Winkelstellung des Innenrings 10 zu dem Außenring 13 bezüglich der Drehachse D immer mehrere Öffnungen 26 der Fluidkanalabschnitte 27 in Fluidverbindung mit der Nut 25, die Öffnungen 26 anderer Fluidkanalabschnitte 27 des Innenrings 10 sind jedoch nicht in Fluidverbindung mit der Nut 25, da sich diese nur über einen begrenzten Umfangswinkelbereich Δα des Außenrings 13 erstreckt. In dem in Figur 5 gezeigten Beispiel sind drei Fluidkanalabschnitte 27 in Fluidverbindung mit der Nut 25, neun Fluidkanalabschnitte 27 sind hingegen nicht in Fluidverbindung mit der Nut 25. Wie in Figur 5 gezeigt, kann somit Fluid 22 von der Schlauchtülle 17 über die Nut 25 in diejenigen Fluidkanalabschnitte 27 des Innenrings 10 gelangen, die in Fluidverbindung mit der Nut 25 stehen. Wenn sich nun der Innenring 10 relativ zum Außenring 13 dreht, wird eine Fluidverbindung der Nut 25 mit anderen Fluidkanalabschnitten 27 des Innenrings 10 hergestellt, wodurch bei einer Rotation des Innenrings 10 eine sequentielle Drehschiebersteuerung für die Fluidzufuhr zu den Fluidkanalabschnitten 27 bereitgestellt wird.

Wie am besten in Figur 4 erkennbar, gelangt das Fluid 22, welches von der Nut 25 in einen Fluidkanalabschnitt 27 des Innenrings 10 gelangt ist, von dort über die Öffnung 28 an der Unterseite des Innenrings 10 in einen Fluidkanalabschnitt 30 in einem Bürstenringsegment 7. Das Bürstenringsegment 7 weist hierfür ein Anschlussstück 29 auf, welches in die zugehörige Öffnung 28 eingeführt wird. In axialer Richtung schließen sich weitere Bürstenringsegmente 7 mit entsprechenden Anschlussstücken 29 an, so dass die vorstehend beschriebene Bürstenringanordnung 6 gebildet wird.

Die Fluidkanalabschnitte 27 und 30 bilden somit einen Fluidkanal. In Umfangsrichtung U sind auf diese Weise mehrere beabstandete separate Fluidkanäle gebildet. Jeder Fluidkanal, das heißt die Fluidkanalabschnitte 30 der Bürstenringsegmente 7, mündet in mehreren Auslassöffnungen 8, die in Längsrichtung der Bürstenringanordnung 6 beabstandet voneinander angeordnet sind. Im vorliegenden Ausführungsbeispiel weist jedes Bürstenringsegment 7 für jeden Fluidkanalabschnitt 30 eine Auslassöffnung 8 auf. Da die Fluidkanalabschnitte 30 in Umfangsrichtung U um die Drehachse D verteilt sind, ergeben sich für jedes Bürstenringsegment 7 genauso viele Auslassöffnungen 8 wie es Fluidkanalabschnitte 30 in einem Bürstenringsegment 7 gibt, wie es in Figur 1 gezeigt ist. Dabei sind die in Längsrichtung der Bürstenringanordnung 6 angeordneten Auslassöffnungen 8 eines bestimmten Fluidkanalabschnitts 30 bei demselben Umfangswinkel der Bürstenringanordnung 6 angeordnet. Die Auslassöffnungen 8 eines jeweils anderen Fluidkanalabschnitts 30 sind hingegen bei einem anderen Umfangswinkel der Bürstenringanordnung 6 angeordnet als die Auslassöffnungen 8 des einen Fluidkanalabschnitts 30.

Wenn somit über die Nut 25 Fluid einem bestimmten Fluidkanal zugeführt wird, tritt dieses Fluid nur über die Auslassöffnungen 8 bei einem bestimmten Umfangswinkel bezüglich der Drehachse D aus. Nachdem bei jeder Winkelstellung des Außenrings 13 zu dem Innenring 10 mehrere Fluidkanäle über die Nut 25 mit Fluid beschickt werden, ergibt sich bei der Bürstenringanordnung 6 ein Fluidausstoß in einem bestimmten begrenzten Umfangswinkelbereich. Bei dem hier beschriebenen Ausführungsbeispiel entspricht dieser Umfangswinkelbereich für den Fluidausstoß dem Umfangswinkelbereich Δα, über welchen sich die Nut 25 in Umfangsrichtung U erstreckt. Auch wenn der Innenring 10 und die Bürstenringanordnung 6 rotieren, verändert sich der Umfangswinkelbereich, bei welchem das Fluid ausgestoßen wird, nicht. Der Fluidausstoß erfolgt jedoch aufgrund der Rotation der Bürstenringanordnung 6 über verschiedene Auslassöffnungen. Wenn somit Behandlungselemente, insbesondere Waschelemente, an der Bürstenringanordnung 6 befestigt sind und diese sich radial von dieser wegerstrecken, werden sie auf dem gesamten Umfang mit Fluid 22 beziehungsweise Waschflüssigkeit benetzt, obwohl der Fluidausstoß immer nur in einem begrenzten Umfangswinkelbereich erfolgt.

Bei dem hier gezeigten Ausführungsbeispiel ist zusätzlich außen von der Bürstenringanordnung 6 noch eine Leitung 31 vorgesehen, welche an den Fluidkanalabschnitt 27 des Innenrings 10 angeschlossen ist. Es kann sich hierbei um eine einzelne Leitung 31 handeln. Es ist jedoch auch möglich, dass an jedem separaten Fluidkanalabschnitt 27 eine separate Leitung 31 angeschlossen ist. Die Leitung 31 weist wiederum mehrere in Längsrichtung beabstandet angeordnete Auslassöffnungen auf. Die Leitung 31 kann alternativ oder zusätzlich zu den Fluidkanalabschnitten 30 im Bürstenringsegment 7 vorgesehen sein. Wenn im Bürstenringsegment 7 kein Fluidkanalabschnitt 30 vorgesehen ist, übernehmen die Leitungen 31 die Funktion dieser Fluidkanalabschnitte 30. Die separaten Leitungen 31 sind in diesem Fall um die Bürstenringanordnung 6 herum bei verschiedenen Umfangswinkeln angeordnet. Auch sie stoßen das Fluid in einen bestimmten Raumwinkelbereich radial nach außen aus, so dass auch durch sie Behandlungs- oder Waschelemente von innen heraus benetzt werden können.

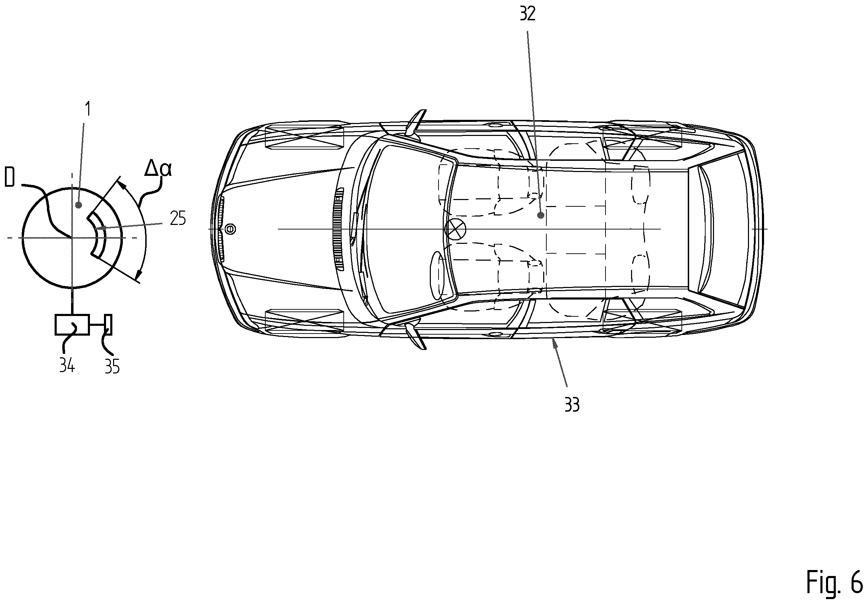

Mit Bezug zu den Figuren 6 bis 8 wird ein Ausführungsbeispiel des erfindungsgemäßen Verfahrens zum Behandeln einer Fahrzeugoberfläche mit einem Fluid erläutert:
Bei dem Verfahren dieses Ausführungsbeispiels wird eine Fahrzeugoberfläche 33 eines Fahrzeugs 32 mit der vorstehend beschriebenen Behandlungsvorrichtung 1 behandelt. Das Fahrzeug 32 kann sich beispielsweise in einer Fahrzeug-Waschanlage befinden, welche die Behandlungsvorrichtung 1 umfasst. Die Behandlungsvorrichtung 1 ist hierfür mit einer Steuervorrichtung 34 verbunden, welche den Motor 3 der Behandlungsvorrichtung ansteuern kann, um die Motorwelle 3 und damit die Bürstenwelle 2 zusammen mit der Bürstenringanordnung 6 in Rotation zu versetzen. Des Weiteren ist die Steuervorrichtung 34 mit den Befestigungselementen 18 gekoppelt. Es kann die Befestigungselemente 18 so ansteuern, dass die Winkelstellung des Außenrings 13 und damit die Winkelstellung der Nut 25 relativ zur Drehachse D verstellt werden kann. Es kann somit die Winkelstellung der Nut 25 relativ zum Fahrzeug 32 verändert werden. Hierfür kann ein (nicht gezeigter) weiterer Motor vorgesehen sein. Des Weiteren ist die Steuervorrichtung 34 mit einem an sich bekannten Sensor 35 gekoppelt, welcher die Position der zu reinigenden Fahrzeugoberfläche 33 relativ zu der Behandlungsvorrichtung 1 erfasst und an die Steuervorrichtung 34 überträgt.

Bei dem Verfahren wird zunächst die Dreheinrichtung, das heißt die Bürstenwelle 2, die Bürstenringanordnung 6 und der Innenring 10, mittels der Motorwelle 3 in Rotation versetzt. Ferner wird dem Außenring 13 über die Schlauchtülle 17 Fluid 22, beispielsweise eine Waschflüssigkeit, zugeführt. Wie vorstehend beschrieben wird das Fluid 22 dann über die Auslassöffnungen 8 in einen Winkelbereich ausgestoßen, der zu dem Umfangswinkelbereich Δα der Nut 25 korrespondiert. Bei der in Figur 6 gezeigten Stellung der Nut 25 zu dem Fahrzeug 32 wird somit das Fluid 22 gegen die Vorderseite des Fahrzeugs 32 ausgestoßen.

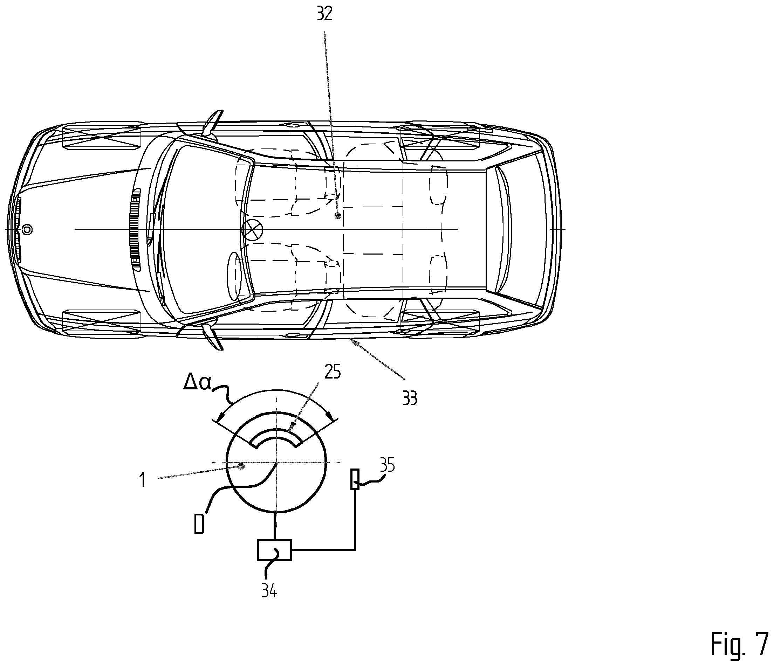

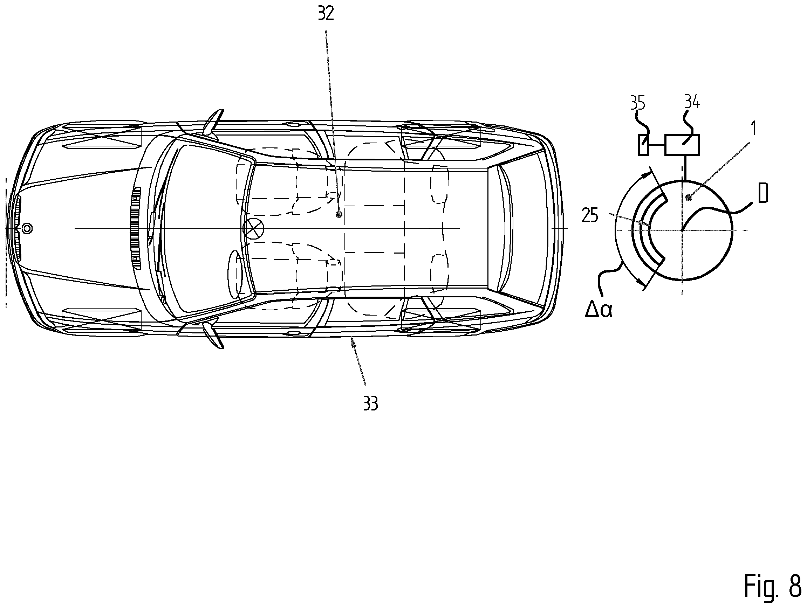

Wie in den Figuren 7 und 8 gezeigt, verändert sich während des Behandlungsvorgangs die relative Lage der Behandlungsvorrichtung 1 zu dem Fahrzeug 32. Bei dieser Lageveränderung ist insbesondere die Winkelstellung der Behandlungsvorrichtung 1 relativ zu der zu reinigenden Fahrzeugoberfläche 33 wichtig. Diese Winkelstellung wird von dem Sensor 35 erfasst und an die Steuervorrichtung 34 übertragen. In Abhängigkeit von dieser Winkelstellung verändert die Steuervorrichtung 34 die Winkelstellung der Nut 25 des Außenrings 13 bezüglich der Drehachse D, wie es in den Figuren 7 und 8 gezeigt ist. In diesem Fall ist der Umfangswinkelbereich Δα der Nut 25 immer in Richtung der zu behandelnden Fahrzeugoberfläche 33 gerichtet, so dass das Fluid 22 auch in diesem Umfangswinkelbereich in Richtung der Fahrzeugoberfläche 33 ausgestoßen wird.

### Bezugszeichenliste

- 1: Behandlungsvorrichtung
- 2: Bürstenwelle
- 3: Motorwelle
- 4: Motor
- 5: Schrauben
- 6: Bürstenringanordnung
- 7: Bürstenringsegmente
- 8: Auslassöffnungen
- 9: Fluidstrahl
- 10: Innenring
- 11: Außenwand des Innenrings
- 12: Innenwand des Innenrings
- 13: Außenring
- 14: Innenwand des Außenrings
- 15: Außenwand des Außenrings
- 16: Einlassöffnung
- 17: Schlauchtülle
- 18: Befestigungselemente
- 19: O-Ringe
- 20: Rotationsdichtungen
- 21: Anschlussringe
- 22: Fluid
- 23: Radialleitung im Außenring
- 24: Metalleinlage
- 25: Nut
- 26: Öffnungen
- 27: Fluidkanalabschnitt im Innenring
- 28: Öffnungen
- 29: Anschlussstück eines Bürstenringsegments
- 30: Fluidkanalabschnitt im Bürstenringsegment
- 31: Leitung
- 32: Fahrzeug
- 33: Fahrzeugoberfläche
- 34: Steuervorrichtung
- 35: Sensor

- D: Drehachse
- U: Umfangsrichtung bezüglich der Drehachse D

## Patentansprüche

1. Vorrichtung (1) zum Behandeln einer Fahrzeugoberfläche (33) mit einem Fluid (22) mit
einer um eine Drehachse (D) rotierbar gelagerten Dreheinrichtung (2, 6, 10) und
einer Fluidzuführeinrichtung (13, 17), die konzentrisch zu der Dreheinrichtung (2, 6, 10) angeordnet ist und die eine Einlassöffnung (16) zur Fluidzufuhr aufweist,
**dadurch gekennzeichnet, dass**
bei der Fluidzuführeinrichtung (13, 17) eine Nut (25) ausgebildet ist, die in Fluidverbindung mit der Einlassöffnung (16) ist und die sich in Umfangsrichtung (U) bezüglich der Drehachse (D) über einen begrenzten Umfangswinkelbereich (Δα) der Fluidzuführeinrichtung (13, 17) erstreckt, und
die Dreheinrichtung (2, 6, 10) mehrere separate Fluidkanäle (27, 30) aufweist, die jeweils in Öffnungen (26) münden, wobei die Öffnungen (26) so angeordnet sind, dass unabhängig von der Winkelstellung der Dreheinrichtung (2, 6, 10) zu der Fluidzuführeinrichtung (13, 17) bezüglich der Drehachse (D) zumindest eine der Öffnungen (26) der Dreheinrichtung (2, 6, 10) in Fluidverbindung mit der Nut (25) der Fluidzuführeinrichtung (13, 17) steht.

2. Vorrichtung (1) nach Anspruch 1,
**dadurch gekennzeichnet, dass**
jeder Fluidkanal (27, 30) die ihm zugeordnete Öffnung (26) der Dreheinrichtung (2, 6, 10) mit mehreren Auslassöffnungen (8) verbindet, die in Längsrichtung der Dreheinrichtung (2, 6, 10) beabstandet voneinander angeordnet sind, wobei die Auslassöffnungen (8) eines Fluidkanals (27, 30) bei jeweils im Wesentlichen demselben Umfangswinkel der Dreheinrichtung (2, 6, 10) angeordnet sind und die Auslassöffnungen (8) eines anderen Fluidkanals (27, 30) bei einem anderen Umfangswinkel der Dreheinrichtung (2, 6, 10) als die Auslassöffnungen (8) des einen Fluidkanals (27, 30) angeordnet sind.

3. Vorrichtung (1) nach Anspruch 1 oder 2,
**dadurch gekennzeichnet, dass**
die Fluidzuführeinrichtung (13, 17) einen Außenring (13) umfasst, der eine rotationssymmetrische Innenwand (14) besitzt, und
die Nut (25) in der rotationssymmetrischen Innenwand (14) gebildet ist.

4. Vorrichtung (1) nach Anspruch 3,
**dadurch gekennzeichnet, dass**
sich die Nut (25) bei der rotationssymmetrischen Innenwand (14) über einen Umfangswinkel erstreckt, der in einem Bereich von 20° bis 180° liegt.

5. Vorrichtung (1) nach einem der Ansprüche 3 oder 4,
**dadurch gekennzeichnet, dass**
die Dreheinrichtung (2, 6, 10) einen Innenring (10) umfasst, der eine rotationssymmetrische Außenwand (11) besitzt, die an die rotationssymmetrische Innenwand (14) des Außenring (13) angrenzt, und
die Öffnungen (26) der Dreheinrichtung (2, 6, 10) in Umfangsrichtung (U) bei der rotationssymmetrischen Außenwand (11) angeordnet sind.

6. Vorrichtung (1) nach Anspruch 5,
**dadurch gekennzeichnet, dass**
sich jeder Fluidkanal (27, 30) von der ihm zugeordneten Öffnung (26) radial nach innen in den Innenring (10) hinein erstreckt und anschließend in Längsrichtung der Dreheinrichtung (2, 6, 10) zu den Auslassöffnungen (8) verläuft.

7. Vorrichtung (1) nach einem der Ansprüche 5 oder 6,
**dadurch gekennzeichnet, dass**
die Dreheinrichtung (2, 6, 10) eine Bürstenwelle (2) und eine Bürstenringanordnung (6) umfasst,
die Bürstenringanordnung (6) konzentrisch zu, außen an und drehfest mit der Bürstenwelle (2) angeordnet ist,
Behandlungselemente an der Bürstenringanordnung (6) befestigt sind,
jeder Fluidkanal (27, 30) einen innerhalb des Innenrings (10) verlaufenden Abschnitt (27) und einen innerhalb der Bürstenringanordnung (6) verlaufenden Abschnitt (30) umfasst und
die Auslassöffnungen (8) in der Bürstenringanordnung (6) gebildet sind.

8. Vorrichtung (1) nach einem der Ansprüche 2 bis 7,
**dadurch gekennzeichnet, dass**
die Auslassöffnungen (8) so ausgebildet sind, dass das Fluid (22) in einem Fluidstrahl (9) in einen Raumwinkel (γ) ausgespritzt wird, der in einem Bereich von 0° bis 15° liegt, und/oder die Mittelache das ausgespritzten Fluidstrahls (9) einen Winkel (δ) mit der Drehachse (D) einschließt, der in einem Bereich von 40° bis 90° liegt.

9. Vorrichtung (1) nach einem der Ansprüche 7 oder 8,
**dadurch gekennzeichnet, dass**
die Bürstenringanordnung (6) mehrere in Längsrichtung der Dreheinrichtung (2, 6, 10) auf der Bürstenwelle (2) befestigte und miteinander gekoppelte Bürstenringsegmente (7) aufweist.

10. Vorrichtung (1) nach einem der Ansprüche 5 bis 9,
**dadurch gekennzeichnet, dass**
der Innenring (10) und der Außenring (13) aus demselben Material, insbesondere aus Kunststoff, bestehen.

11. Vorrichtung (1) nach einem der Ansprüche 5 bis 10,
**dadurch gekennzeichnet, dass**
die Dreheinrichtung (2, 6, 10) mit zumindest einer Metalleinlage (24) drehfest gekoppelt ist, die an einer Motorwelle (3) befestigt ist und die im Eingriff mit dem Innenring (10) ist.

12. Vorrichtung (1) nach einem der vorhergehenden Ansprüche,
**dadurch gekennzeichnet, dass**
die Winkelstellung der Fluidzuführeinrichtung (13, 17) bezüglich der Drehachse (D) verstellbar ist.

13. Verfahren zum Behandeln einer Fahrzeugoberfläche (33) mit einem Fluid (22) mittels einer Behandlungsvorrichtung (1), die eine um eine Drehachse (D) rotierbar gelagerte Dreheinrichtung (2, 6, 10) mit separaten Fluidkanälen (27, 30) und eine konzentrisch zu der Dreheinrichtung (2, 6, 10) angeordnete Fluidzuführeinrichtung (13, 17) umfasst, wobei bei dem Verfahren:
Fluid (22) über eine Einlassöffnung (16) der Fluidzuführeinrichtung (13, 17) zugeführt wird,
das Fluid (22) in der Fluidzuführeinrichtung (13, 17) von der Einlassöffnung (16) in eine Nut (25) geleitet wird, die in Fluidverbindung mit der Einlassöffnung (16) ist und die sich in Umfangsrichtung (U) bezüglich der Drehachse (D) über einen begrenzten Umfangswinkelbereich (Δα) der Fluidzuführeinrichtung (13, 17) erstreckt, und
das Fluid (22) der rotierenden Dreheinrichtung (2, 6, 10) zugeführt wird, wobei das Fluid (22) von der Nut (25) einer Teilmenge der Fluidkanäle (27, 30) zugeführt wird, wobei Öffnungen (26) der Fluidkanäle (27, 30) so angeordnet sind, dass unabhängig von der Winkelstellung der Dreheinrichtung (2, 6, 10) zu der Fluidzuführeinrichtung (13, 17) bezüglich der Drehachse (D) zumindest eine Öffnung (26) in Fluidverbindung mit der Nut (25) der Fluidzuführeinrichtung (13, 17) steht.

14. Verfahren nach Anspruch 13,
**dadurch gekennzeichnet, dass**
das Fluid (22) von einem der Fluidkanäle (27, 30) mehreren Auslassöffnungen (8) der Dreheinrichtung (2, 6, 10) zugeführt wird und bei den Auslassöffnungen (8) ausgespritzt wird, wobei die Auslassöffnungen (8) eines Fluidkanals (27, 30) in Längsrichtung der Dreheinrichtung (2, 6, 10) beabstandet voneinander angeordnet sind, wobei die Auslassöffnungen (8) eines Fluidkanals (27, 30) bei jeweils im Wesentlichen demselben Umfangswinkel der Dreheinrichtung (2, 6, 10) angeordnet sind und die Auslassöffnungen (8) eines anderen Fluidkanals (27, 30) bei einem anderen Umfangswinkel der Dreheinrichtung (2, 6, 10) als die Auslassöffnungen (8) des einen Fluidkanals (27, 30) angeordnet sind.

15. Verfahren nach einem der Ansprüche 13 oder 14,
**dadurch gekennzeichnet, dass**
die Winkelstellung der Behandlungsvorrichtung (1) relativ zu einer zu reinigenden Fahrzeugoberfläche (33) erfasst wird und die Winkelstellung der Nut (25) der Fluidzuführeinrichtung (13, 17) bezüglich der Drehachse (D) in Abhängigkeit von der erfassten Winkelstellung der Behandlungsvorrichtung (1) relativ zu der zu reinigenden Fahrzeugoberfläche (33) eingestellt wird.

## Claims

1. Apparatus (1) for treating a vehicle surface (33) with a fluid (22), having
a rotation device (2, 6, 10) pivotably mounted about an axis of rotation (D) and
a fluid supply device (13, 17) which is disposed concentrically with respect to the rotation device (2, 6, 10) and which has an inlet opening (16) for the supply of fluid,
**characterized in that**
a groove (25) is formed in the fluid supply device (13, 17), said groove being fluidically connected to the inlet opening (16) and extending in the circumferential direction (U) with respect to the axis of rotation (D) over a limited circumferential angular range (Δα) of the fluid supply device (13, 17), and
the rotation device (2, 6, 10) has a plurality of separate fluid channels (27, 30), each of which opens into openings (26), said openings (26) being disposed in such a manner that, irrespective of the angular position of the rotation device (2, 6, 10) to the fluid supply device (13, 17) with respect to the axis of rotation (D), at least one of the openings (26) of the rotation device (2, 6, 10) is fluidically connected to the groove (25) of the fluid supply device (13, 17).

2. The apparatus (1) as in Claim 1,
**characterized in that**
each fluid channel (27, 30) connects the associated opening (26) of the rotation device (2, 6, 10) to a plurality of outlet openings (8) which are disposed at a distance from each other in the lengthwise direction of the rotation device (2, 6, 10), with the outlet openings (8) of one fluid channel (27, 30) being disposed at essentially the same circumferential angle of the rotation device (2, 6, 10) and with the outlet openings (8) of another fluid channel (27, 30) being disposed at a circumferential angle of the rotation device (2, 6, 10) different from that of the outlet openings (8) of the one fluid channel (27, 30).

3. The apparatus (1) as in Claim 1 or 2,
**characterized in that**
the fluid supply device (13, 17) comprises an outer ring (13) which has a rotationally symmetrical interior wall (14), and
**in that** the groove (25) is formed in the rotationally symmetrical interior wall (14).

4. The apparatus (1) as in Claim 3,
**characterized in that**
the groove (25) in the rotationally symmetrical interior wall (14) extends over a circumferential angle which is in a range of 20° to 180°.

5. The apparatus (1) as in one of Claims 3 or 4,
**characterized in that**
the rotation device (2, 6, 10) comprises an inner ring (10) which has a rotationally symmetrical exterior wall (11) which adjoins the rotationally symmetrical interior wall (14) of the outer ring (13), and
**in that** the openings (26) of the rotation device (2, 6, 10) in the circumferential direction (U) are disposed in the rotationally symmetrical exterior wall (11).

6. The apparatus (1) as in Claim 5,
**characterized in that**
each fluid channel (27, 30) extends from the associated opening (26) radially into the inner ring (10) and subsequently runs in the lengthwise direction of the rotation device (2, 6, 10) to the outlet openings (8).

7. The apparatus (1) as in one of Claims 5 or 6,
**characterized in that**
the rotation device (2, 6, 10) comprises a brush shaft (2) and a brush ring assembly (6),
**in that** the brush ring assembly (6) is disposed concentrically relative to, on the exterior of, and torsionally rigidly to the brush shaft (2),
**in that** treatment elements are attached to the brush ring assembly (6),
**in that** each fluid channel (27, 30) comprises a section (27) extending within the inner ring (10) and a section (30) extending within the brush ring assembly (6), and
**in that** the outlet openings (8) are formed in the brush ring assembly (6).

8. The apparatus (1) as in one of Claims 2 to 7,
**characterized in that**
the outlet openings (8) are designed in such a manner that the fluid (22) is sprayed in a fluid jet (9) into a spatial angle (γ) which is in a range of 0° to 15°, and/or the center line of the sprayed fluid jet (9) forms an angle (δ) with the axis of rotation (D), which is in a range of 40° to 90°.

9. The apparatus (1) as in one of Claims 7 or 8,
**characterized in that**
the brush ring assembly (6) comprises a plurality of brush ring segments (7) which are attached to the brush shaft (2) in the lengthwise direction of the rotation device (2, 6, 10) and which are connected to each other.

10. The apparatus (1) as in one of Claims 5 to 9,
**characterized in that**
the inner ring (10) and the outer ring (13) are made of the same material, especially of a plastic material.

11. The apparatus (1) as in one of Claims 5 to 10,
**characterized in that**
the rotation device (2, 6, 10) is torsionally rigidly connected to at least one metal liner (24) which is connected to a motor shaft (3) and which is engaged in the inner ring (10).

12. The apparatus (1) as in any one of the preceding claims,
**characterized in that**
the angular position of the fluid supply device (13, 17) with respect to the axis of rotation (D) can be adjusted.

13. A method for treating a vehicle surface (33) with a fluid (22) by means of a treatment apparatus (1) that comprises a rotation device (2, 6, 10) with separate fluid channels (27, 30), which is pivotably mounted about an axis of rotation (D), and a fluid supply device (13, 17) which is disposed concentrically relative to the rotation device (2, 6, 10), in which method:
fluid (22) is supplied via an inlet opening (16) to the fluid supply device (13, 17),
the fluid (22) in the fluid supply device (13, 17) is conducted from the inlet opening (16) into a groove (25) which is fluidically connected to the inlet opening (16) and which, in the circumferential direction (U) with respect to the axis of rotation (D), extends over a limited circumferential angular range (Δα) of the fluid supply device (13, 17), and
the fluid (22) is supplied to the rotating rotation device (2, 6, 10), with the fluid (22) being supplied from the groove (25) to a subset of the fluid channels (27, 30), with openings (26) of the fluid channels (27, 30) being disposed in such a way that, irrespective of the angular position of the rotation device (2, 6, 10) to the fluid supply device (13, 17) with respect to the axis of rotation (D), at least one opening (26) is fluidically connected to the groove (25) of the fluid supply device (13, 17).

14. The method as in Claim 13,
**characterized in that**
the fluid (22) is supplied by one of the fluid channels (27, 30) to a plurality of outlet openings (8) of the rotation device (2, 6, 10) and is sprayed out of the outlet openings (8), with the outlet openings (8) of a fluid channel (27, 30) in the lengthwise direction of the rotation device (2, 6, 10) being disposed at a distance from each other, with the outlet openings (8) of each fluid channel (27, 30) being disposed at essentially the same circumferential angle of the rotation device (2, 6, 10) and with the outlet openings (8) of another fluid channel (27, 30) being disposed at a circumferential angle of the rotation device (2, 6, 10) different from that of the outlet openings (8) of the one fluid channel (27, 30).

15. The method as in one of Claims 13 or 14,
**characterized in that**
the angular position of the treatment apparatus (1) relative to a vehicle surface (33) to be cleaned is detected, and the angular position of the groove (25) of the fluid supply device (13, 17) with respect to the axis of rotation (D) is adjusted as a function of the detected angular position of the treatment apparatus (1) relative to the vehicle surface (33) to be cleaned.

## Revendications

1. Dispositif (1) de traitement d'une surface de véhicule (33) par un fluide (22), comprenant
un dispositif de rotation (2, 6, 10) monté de manière à pouvoir tourner autour d'un axe de rotation (D) et
un dispositif d'alimentation en fluide (13, 17) qui est disposé concentriquement au dispositif de rotation (2, 6, 10) et qui comprend une ouverture d'entrée (16) pour l'amenée de fluide,
**caractérisé en ce**
**qu'**une rainure (25) est réalisée dans le dispositif d'alimentation en fluide (13, 17), laquelle est en liaison fluidique avec l'ouverture d'entrée (16) et laquelle s'étend sur une plage angulaire périphérique (Δα) limitée du dispositif d'alimentation en fluide (13, 17) dans la direction périphérique (U) par rapport à l'axe de rotation (D) et
**en ce que** le dispositif de rotation (2, 6, 10) comprend plusieurs conduits de fluide séparés (27, 30) qui débouchent respectivement dans des ouvertures (26), les ouvertures (26) étant disposées de telle sorte qu'indépendamment de la position angulaire du dispositif de rotation (2, 6, 10) par rapport au dispositif d'alimentation en fluide (13, 17) en référence à l'axe de rotation (D), au moins l'une des ouvertures (26) du dispositif de rotation (2, 6, 10) est en liaison fluidique avec la rainure (25) du dispositif d'alimentation en fluide (13, 17).

2. Dispositif (1) selon la revendication 1,
**caractérisé en ce que**
chaque conduit de fluide (27, 30) relie l'ouverture (26) du dispositif de rotation (2, 6, 10) qui lui est associée à plusieurs ouvertures de sortie (8) qui sont disposées de manière espacée les unes des autres dans la direction longitudinale du dispositif de rotation (2, 6, 10), les ouvertures de sortie (8) d'un conduit de fluide (27, 30) étant disposées suivant respectivement sensiblement le même angle périphérique du dispositif de rotation (2, 6, 10) et les ouvertures de sortie (8) d'un autre conduit de fluide (27, 30) étant disposées suivant un autre angle périphérique du dispositif de rotation (2, 6, 10) que les ouvertures de sortie (8) dudit un conduit de fluide (27, 30).

3. Dispositif (1) selon la revendication 1 ou 2,
**caractérisé en ce que**
le dispositif d'alimentation en fluide (13, 17) comporte une bague extérieure (13) qui présente une paroi intérieure (14) à symétrie de révolution et
la rainure (25) est formée dans la paroi intérieure (14) à symétrie de révolution.

4. Dispositif (1) selon la revendication 3,
**caractérisé en ce que**
la rainure (25) dans la paroi intérieure (14) à symétrie de révolution s'étend sur un angle périphérique qui est compris dans une plage de 20° à 180°.

5. Dispositif (1) selon la revendication 3 ou 4,
**caractérisé en ce que**
le dispositif de rotation (2, 6, 10) comporte une bague intérieure (10) qui présente une paroi extérieure (11) à symétrie de révolution qui est adjacente à la paroi intérieure (14) à symétrie de révolution de la bague extérieure (13) et
les ouvertures (26) du dispositif de rotation (2, 6, 10) sont disposées dans la paroi extérieure (11) à symétrie de révolution dans la direction périphérique (U).

6. Dispositif (1) selon la revendication 5,
**caractérisé en ce que**
chaque conduit de fluide (27, 30) s'étend, à partir de l'ouverture (26) qui lui est associée, radialement vers l'intérieur dans la bague intérieure (10) et s'étend dans la direction longitudinale du dispositif de rotation ensuite (2, 6, 10) jusqu'aux ouvertures de sortie (8).

7. Dispositif (1) selon la revendication 5 ou 6,
**caractérisé en ce que**
le dispositif de rotation (2, 6, 10) comporte un arbre de brosse (2) et un ensemble d'anneau de brosse (6),
l'ensemble d'anneau de brosse (6) est disposé de manière concentrique à l'arbre de brosse (2), à l'extérieur de celui-ci et de manière solidaire en rotation avec celui-ci,
des éléments de traitement sont fixés à l'ensemble d'anneau de brosse (6),
chaque conduit de fluide (27, 30) comprend une partie (27) s'étendant à l'intérieur de la bague intérieure (10) et une partie (30) s'étendant à l'intérieur de l'ensemble d'anneau de brosse (6) et
les ouvertures de sortie (8) sont formées dans l'ensemble d'anneau de brosse (6).

8. Dispositif (1) selon l'une des revendications 2 à 7,
**caractérisé en ce que**
les ouvertures de sortie (8) sont réalisées de telle sorte que le fluide (22) est éjecté dans un jet de fluide (9) dans un angle solide (y) qui est compris dans une plage de 0° à 15°, et/ou l'axe médian du jet de fluide éjecté (9) forme avec l'axe de rotation (D) un angle (δ) qui est compris dans une plage de 40° à 90°.

9. Dispositif (1) selon la revendication 7 ou 8,
**caractérisé en ce que**
l'ensemble d'anneau de brosse (6) comprend plusieurs segments d'anneau de brosse (7) fixés sur l'arbre de brosse (2) dans la direction longitudinale du dispositif de rotation (2, 6, 10) et accouplés les uns aux autres.

10. Dispositif (1) selon l'une des revendications 5 à 9,
**caractérisé en ce que**
la bague intérieure (10) et la bague extérieure (13) sont constituées du même matériau, en particulier de matière synthétique.

11. Dispositif (1) selon l'une des revendications 5 à 10,
**caractérisé en ce que**
le dispositif de rotation (2, 6, 10) est accouplé de manière solidaire en rotation à au moins un insert métallique (24) qui est fixé à un arbre de moteur (3) et qui est en prise avec la bague intérieure (10).

12. Dispositif (1) selon l'une des revendications précédentes,
**caractérisé en ce que**
la position angulaire du dispositif d'alimentation en fluide (13, 17) par rapport à l'axe de rotation (D) est réglable.

13. Procédé de traitement d'une surface de véhicule (33) par un fluide (22) au moyen d'un dispositif de traitement (1) qui comporte un dispositif de rotation (2, 6, 10) monté de manière à pouvoir tourner autour d'un axe de rotation (D) et doté de conduits de fluide séparés (27, 30) et un dispositif d'alimentation en fluide (13, 17) disposé concentriquement au dispositif de rotation (2, 6, 10), procédé selon lequel :
du fluide (22) est acheminé par le biais d'une ouverture d'entrée (16) jusqu'au dispositif d'alimentation en fluide (13, 17),
le fluide (22) dans le dispositif d'alimentation en fluide (13, 17) est guidé dans une rainure (25) à partir de l'ouverture d'entrée (16), laquelle rainure est en liaison fluidique avec l'ouverture d'entrée (16) et laquelle s'étend sur une plage angulaire périphérique (Δα) limitée du dispositif d'alimentation en fluide (13, 17) dans la direction périphérique (U) par rapport à l'axe de rotation (D) et
le fluide (22) est acheminé jusqu'au dispositif de rotation (2, 6, 10) tournant, le fluide (22) étant acheminé à partir de la rainure (25) jusqu'à un sous-ensemble des conduits de fluide (27, 30), les ouvertures (26) des conduits de fluide (27, 30) étant disposées de telle sorte qu'indépendamment de la position angulaire du dispositif de rotation (2, 6, 10) par rapport au dispositif d'alimentation en fluide (13, 17) en référence à l'axe de rotation (D), au moins une ouverture (26) est en liaison fluidique avec la rainure (25) du dispositif d'alimentation en fluide (13, 17).

14. Procédé selon la revendication 13,
**caractérisé en ce que**
le fluide est acheminé (22) à partir de l'un des conduits de fluide (27, 30) jusqu'à plusieurs ouvertures de sortie (8) du dispositif de rotation (2, 6, 10) et est éjecté au niveau des ouvertures de sortie (8), les ouvertures de sortie (8) d'un conduit de fluide (27, 30) étant disposées de manière espacée les unes des autres dans la direction longitudinale du dispositif de rotation (2, 6, 10), les ouvertures de sortie (8) d'un conduit de fluide (27, 30) étant disposées suivant respectivement sensiblement le même angle périphérique du dispositif de rotation (2, 6, 10) et les ouvertures de sortie (8) d'un autre conduit de fluide (27, 30) étant disposées suivant un autre angle périphérique du dispositif de rotation (2, 6, 10) que les ouvertures de sortie (8) dudit un conduit de fluide (27, 30).

15. Procédé selon la revendication 13 ou 14,
**caractérisé en ce que**
la position angulaire du dispositif de traitement (1) par rapport à une surface de véhicule (33) à nettoyer est détectée et la position angulaire de la rainure (25) du dispositif d'alimentation en fluide (13, 17) par rapport à l'axe de rotation (D) est réglée en fonction de la position angulaire détectée du dispositif de traitement (1) par rapport à la surface de véhicule (33) à nettoyer.
